# EUROPÄISCHE PATENTSCHRIFT

(11) **EP 2 180 167 B1**
(45) Veröffentlichungstag und Bekanntmachung des Hinweises auf die Patenterteilung: **26.02.2014**
(21) Anmeldenummer: 09003474.5
(22) Anmeldetag: 10.03.2009
(51) Int. Cl.: F02D 9/04, F02D 9/10, F02D 11/06, F02D 11/10, F16K 1/22

(54) **Abgasklappenantrieb für ein Kraftfahrzeug**
Exhaust gas valve drive for a motor vehicle
Entraînement de clapet de gaz d'échappement pour véhicule automobile

(30) Priorität: 23.10.2008 DE 102008052846
(43) Veröffentlichungstag der Anmeldung: 28.04.2010
(73) Patentinhaber: Küster Holding GmbH, 35630 Ehringshausen (DE)
(72) Erfinder: Schmidt, Thomas, 35410 Hungen-Rodheim (DE); Reymann, Oliver, 35398 Gießen (DE); Blücher, Martin, 35630 Ehringshausen (DE); Bullmann, Kai, 35519 Rockenberg (DE)
(74) Vertreter: Müller, Eckhard

(56) Entgegenhaltungen:
- EP-A- 0 389 649
- WO-A-2007/124852
- DE-A1- 10 207 060
- DE-A1- 10 252 424
- GB-A- 2 089 430
- US-A1- 2008 237 521

## Beschreibung

### Technisches Gebiet

Die Erfindung betrifft einen Abgasklappenantrieb für ein Kraftfahrzeug mit einem Antriebsmotor 32 für eine Abgasklappe 8 des Kraftfahrzeuges, wobei der Antriebsmotor 32 mit einer Motorausgangswelle 34 ggf. über ein Getriebe 28 und einer ausgangsseitigen Abtriebswelle 44 mit einer Abgasklappenwelle 10 zur Betätigung der Abgasklappe 8 wirkverbunden ist, wobei in den Antriebsstrang zwischen dem Antriebsmotor 32 und der Abgasklappe 8 ein Koppelelement 48 geschaltet ist, welches eine Federelastizität zum Aufbau einer auf die Abgasklappe 8 wirkenden Vorspannung besitzt.

Ein solcher Abgasklappenantrieb ist aus DE 102 07 060 A1 bekannt.

Bei Verbrennungsmotoren, insbesondere von Kraftfahrzeugen, ist es bekannt im Abgassystem verstellbare Klappen anzuordnen, mit denen ein gezieltes Verschliessen und Öffnen einzelner Rohrquerschnitte ermöglicht wird. Zur Einsparung von Kraftstoff bei hubraumstarken Verbrennungsmotoren, insbesondere bei V8 und V12 Motoren, ist eine Zylinderabschaltung vorgesehen. Diese Abschaltung erfolgt im sogenannten Teillastbereich des Motors, wobei eine komplette Zylinderreihe abgeschaltet werden kann. Um dann noch den notwendigen Gegendruck in der Abgasanlage Aufrecht zu erhalten, werden die Abgasklappen vollständig oder teilweise geschlossen.
Weiterhin kann mit dieser Maßnahme das Sounddesign eines Verbrennungsmotors beeinflusst werden. So kann auch bei einer abgeschalteten Zylinderreihe ein Motorgeräusch erzeugt werden, als ob alle Zylinder an der Verbrennung beteiligt sind. Die Automobilhersteller nutzen diese Möglichkeit auch, um ein markentypisches Verbrennungs- und Auspuffgeräusch zu generieren.

Eine weitere Maßnahme zur Reduzierung des Kraftstoffverbrauchs und der Schadstoffemission bei Verbrennungsmotoren besteht darin, dass ein Teil des zuvor am Verbrennungsprozess beteiligten Abgases wieder in den Ansaugkanal des Motors zurückgeführt wird um erneut an der Verbrennung beteiligt zu werden.

Für diese Abgasrückführung kommen ebenfalls die oben beschriebenen verstellbaren Klappen zum Einsatz.

Aus dem Stand der Technik sind verstellbare Abgasklappen bekannt, die von einem Aktuator, z. B. einem Elektromotor, betätigt werden, der direkt oder über Zwischenschaltung eines Getriebes an die Welle der Abgasklappe angebunden ist. Die erstgenannte Anordnung hat sich insbesondere deshalb bewährt, als eine weitgehend toleranzunabhängige Betätigung möglich ist.

Aus der DE 10 2004 040 817 A1 ist z.B. ein derartiger Abgasklappenentrieb bekannt, bei dem eine Abtriebswelle eines elektomotorischen Aktuators direkt mit der Klappenwelle fluchtet. Durch diese, über ein kurzes steifes Zwischenelement erfolgende, direkte Verbindung ist ein sehr exaktes Übertragen des Drehwinkels der Abtriebswelle auf die Klappenwelle der Abgasklappe möglich. Bevorzugt ist dabei zwischen Aktuator und Klappenwelle eine Kupplung vorgesehen. Dadurch ist es möglich, dass nur zum Verschwenken der Abgasklappe eine Verbindung zwischen Abtriebswelle und Klappenwelle besteht. Damit erfolgt auch nur während eines kurzen Zeitraums eine Wärmeübertragung von der Klappenwelle auf die Antriebswelle und somit in den Aktuator.

Ferner ist aus der EP 1 245 820 A1 ein Abgasrückführventil bekannt welches in der Abgasrückführleitung eines Verbrennungmotors angeordnet ist und quer zur Strömungsrichtung des Abgases auf einen Ventilsitz klapp-, dreh- oder schwenkbar ist. Erfindungsgemäß ist das Ventilelement so gestaltet, dass es im geschlossen Zustand vollständig auf einem Ventilsitz aufliegt. Das Ventilelement selbst ist so gestaltet, dass es alleine für die Abdichtung an dem Ventilsitz sorgt und an den Lagerstellen nicht unterbrochen ist, wodurch die Gefahr von Leckagen beseitigt ist. Das Ventilelement wird von einem elektromotorischen Aktuator betätigt, wobei das Drehmoment zwischen der Abtriebswelle des Aktuators und der Drehwelle des Ventils über eine U-förmige Klammer erfolgt.

Diese Klammer weist an ihren gegenüberliegenden Flächen bevorzugt Vierkantlöcher auf, in die die Enden der Abtriebswelle und der Drehwelle eingreifen und ist neben der Übertragung von Drehbewegungen insbesondere dafür ausgelegt, nur in äußerst geringem Umfang Wärme zu übertragen.

Nachteilig an den zuvor beschriebenen Vorrichtungen ist, dass durch die steife Anbindung bzw. Kopplung Abtriebswelle und Dreh- bzw. Klappenwelle ein Toleranzausgleich im Betrieb zwischen Abtriebswelle und Dreh- bzw. Klappenwelle nicht ermöglicht ist. Weiterhin besteht das Problem, dass bei abgeschaltetem Elektromotor des Aktuators es nicht gewährleistet ist, dass die Abgasklappe dauerhaft in der geschlossenen Stellung verbleibt. Dies kann zu Undichtigkeiten und aufgrund eines Flatterns der Abgasklappe im Abgasstrom, zu Geräuschen führen.

Aufgabe der Erfindung ist es, einen verbesserten Abgasklappenantrieb anzugeben.

Diese Aufgabe wird nach der Erfindung mit einem Abgasklappenantrieb mit den Merkmalen des Anspruches 1 gelöst.

Dadurch, dass in den Antriebsstrang zwischen dem Antriebsmotor und der Abgasklappe ein Koppelelement geschaltet ist, welches eine Federelastizität zum Aufbau einer auf die Abgasklappe wirkenden Vorspannung besitzt, wird ein sicheres Anliegen der Abgasklappe an dem Endanschlag selbst dann erreicht, wenn der Antriebsmotor abgeschaltet ist. Ebenso ist ein Toleranzausgleich ermöglicht. Auch wird eine Vibrationsdämpfung der Abgasklappe bewirkt, so dass unter Umständen auftretende Vibrationsgeräusche vermieden werden.
Nach einer ersten vorteilhaften Weiterbildung der Erfindung ist es vorgesehen, dass die Motorausgangswelle direkt mit der Abgasklappe oder der Abgasklappenwelle gekoppelt ist. Durch diese Maßnahme wird die Anzahl der erforderlichen Bauteile verringert, wodurch die Kosten des Antriebes reduziert sind.

Erfindungsgemäß ist das Koppelelement in einer Aufnahme am Abschirmblech und/oder Halteblech für den Antriebsmotor und/oder das Getriebe aufgenommen.

Sofern eine Zylinder- oder Spiralfeder als Koppelelement zum Einsatz kommt, dient die Aufnahme zur Führung und Abstützung desselben. Beim Einsatz einer Zylinderfeder ist die Aufnahme am Abschirmblech bevorzugt kegelstumpfartig ausgebildet.

Alternativ kann die Motorausgangswelle über ein Getriebe mit einer Getriebeabtriebswelle mit der Abgasklappe oder der Abgasklappenwelle gekoppelt sein. Mittels dieser Maßnahme lassen sich insbesondere die Drehzahl des Antriebsmotors an die Betätigungsgeschwindigkeit und die gewünschten Drehmomente anpassen.

Von Vorteil ist der Antriebsmotor als Elektromotor, bevorzugt als Servomotor ausgebildet, wodurch sich eine besonders exakte Steuerung der Abgasklappe erreichen lässt. Zudem sind Elektromotoren überaus drehmomentstark.

Das Koppelelement kann nach einer anderen vorteilhaften Ausführungsform der Erfindung als Elastomer oder auch als Feder ausgebildet sein, wodurch die Vibrationsdämpfung der Abgasklappe sowie das sichere Anliegen der Abgasklappe am Endanschlag wie auch der Toleranzausgleich sicher und einfach erreicht werden. Durch diese Ausbildung des Koppelelementes wird eine relative Verdrehung von Abgasklappe und Abtriebswelle gegeneinander in Abhängigkeit eines von der Abgasklappe ausgeübten Gegenmomentes gegen das Moment, das von der Abtriebswelle über das Koppelement übertragen wird, erlaubt. Durch diese Maßnahme wird beim Anliegen der Abgasklappe an einem Endanschlag aufgrund der wirksam werdenden Vorspannung des Koppelelementes ein definiertes Drehmoment auf die Abgasklappe ausgeübt, welches ein sicheres Anliegen der Abgasklappe an dem Endanschlag ermöglicht. Auch wird durch diese Maßnahme gewährleistet, dass die Abgasklappe vibrationsfrei dem Endanschlag anliegt. Dieses federelastische Koppelelement übertragt das Drehmoment vom Aktuator bzw. Antriebsmotor auf die Klappe in der Form, dass es für die Übertragung der erforderlichen Bewegungsenergie eine ausreichende Steifigkeit besitzt und sich eine auf die Abgasklappe wirkende Vorspannung erst dann aufbaut, wenn diese gegen den oder die Endanschläge anliegt. Die sich dann im Koppelement aufbauende Vorspannung bleibt erhalten und drückt die Abgasklappe auch dann weiter gegen den Endanschlag, wenn der Stellmotor nicht mehr bestromt wird. Dichtheit und Geräuschfreiheit sind daher dauerhaft gewährleistet.

Nach einer anderen vorteilhaften Weiterbildung der Erfindung ist das Koppelement als gewundene Torsionsfeder, z. B. als Zylinderfeder, ausgebildet. Mit diesen Zylinderfedern ist die Einstellung der erforderlichen Federkonstante zur Übertragung bzw. Ausübung des gewünschten Drehmomentes bzw. Vorspannung auf die Abgasklappe einfach möglich.

Andererseits können nach einer weiteren vorteilhaften Ausgestaltung als Koppelelement auch gerade Torsionsfedern, z. B. ein Torsionsstab oder ein Federband, eingesetzt werden.

Das Koppelement kann bevorzugt auch als Spiralfeder ausgebildet sein, wodurch sich unter Umständen der axiale Bauraum des Abgasklappenantriebs reduziert.

Bevorzugt ist das Koppelelement bevorzugt unmittelbar zwischen die Motorausgangswelle des Antriebsmotors und die Abgasklappenwelle der Abgasklappe geschaltet.

Wird jedoch ein Getriebe zwischen Antriebsmotor und Abgasklappe eingesetzt, bietet es sich an, das Koppelement bevorzugt unmittelbar zwischen die ausgangsseitige Abtriebswelle des Getriebes und die Abgasklappenwelle zuschalten.

Weitere Ziele, Merkmale sowie vorteilhafte Anwendungsmöglichkeiten der Erfindung ergeben sich aus der nachfolgenden Beschreibung eines Ausführungsbeispiels anhand der Zeichnungen. Dabei bilden sämtliche beschriebenen und/oder bildlich dargestellten Merkmale in ihrer sinnvollen Kombination den Gegenstand der vorliegenden Erfindung, auch unabhängig von den Patentansprüchen und deren Rückbezügen.

### Ausführungsbeispiele

Der Erfindung wird anhand einiger Ausführungsbeispiele erläutert. Dabei zeigen schematisch:
- Fig. 1: einen erfindungsgemäßen Abgasklappenantrieb, der direkt auf einer Abgasklappe befestigt ist, in perspektivischer Darstellung;
- Fig. 2: das Zusammenwirken von Antriebskomponenten des Abgasklappenantriebs gemäß Fig. 1 in perspektivischer Darstellung;
- Fig. 3: ein weiteres Ausführungsbeispiel eines erfindungsgemäßen Abgasklappenantriebes in perspektivischer Darstellung, bei dem ein Teil des Gehäuses weggebrochen ist, um die Positionierung und Wirkung des Kopplungselementes zu verdeutlichen;
- Fig. 4 bis 7: in schematischer Darstellung weitere Ausführungsformen des erfindungsgemäßen Kopplungselementes, wobei in den Figuren 4 und 5 als Kopplungselement eine gerade Torsionsfeder, in Fig. 6 eine gewundene Torsionsfeder und in Fig. 7 eine Spiralfeder zum Einsatz gelangt.

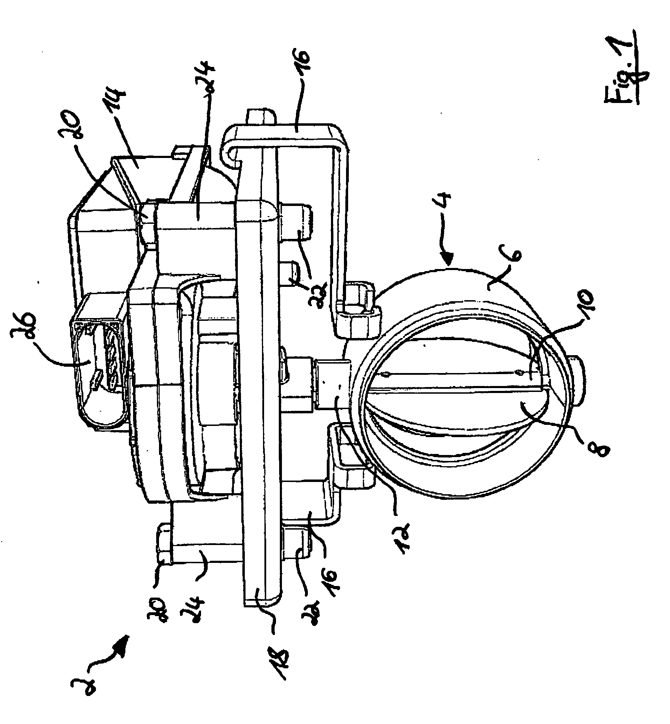

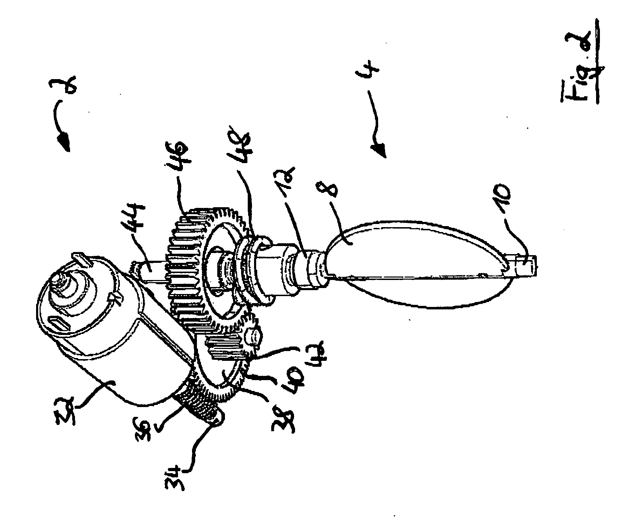

Fig. 1 und 2 zeigen einen erfindungsgemäßen Abgasklappenantrieb 2 in einer direkt auf einem Abgasklappenmodul 4 angeordneten Konfiguration. Das Abgasklappenmodul 4 weist ein Anschlusssegment 6 zum Anschluss des Abgasklappemoduls 4 an einen Abgastrakt eines Kraftfahrzeuges auf. Im Inneren des Abgasklappemoduls 4 ist eine Abgasklappe 8 mittels einer Abgasklappenwelle 10 drehbar belagert. Über eine an dem Anschlusssegment 6 vorgesehene Kupplung 12 ist die Abgasklappenwelle 10 von außerhalb des Anschlusssegments 6 zugänglich.

Der Abgasklappenantrieb 2 ist mittels einer in Fig. 1 nicht dargestellten Welle über die Kupplung 12 an die Abgasklappenwelle 10 auf einer gemeinsamen Achse angeschlossen und weist ein Gehäuse 14 auf, in dessen Inneren eine Antriebseinheit des Abgasklappenantriebes 2 angeordnet ist.

Das Abgasklappenmodul 4 ist über Stützbügel 16 oder dergleichen Halteelement relativ zu einem Bauteil 18 positioniert. Auf der rückwärtigen Seite des Bauteils 18 ist der Abgasklappenantrieb 2 mittels Schrauben 20 und Muttern 22 ebenfalls an dem Bauteil 18 festgelegt, wobei ein Abtrieb des Abgasklappenantriebs 2 durch eine Ausnehmung in dem Bauteil 18 geführt ist. Zur Durchführung der Schrauben 20 sind an dem Gehäuse 14 des Abgasklappenantriebs 2 Halteelemente 24 mit Bohrungen zum Durchstecken der Schrauben vorgesehen. Der Abgasklappenantrieb 2 wird über einen Steckkontakt 26 mit Energie versorgt und gesteuert.

Fig. 2 zeigt in perspektivischer Ansicht das Zusammenwirken der Antriebskomponenten des erfindungsgemäßen Abgasklappenantriebs 2 und dessen Ankopplung an eine Abgasklappe 8, wobei zur Verdeutlichung einige Gehäuse und Rohrbauteile nicht dargestellt sind. Der Abgasklappenantrieb 2 weist einen elektrischen Antriebsmotor 32 auf, dessen Antriebsmoment über eine Motorausgangswelle 34 z. B. auf ein Getriebe 28 abgegeben wird. Die Motorausgangswelle 34 weist ein Schneckengewinde 36 auf, welches ein Getriebezwischenrad 38 mit einem Stirnrad 40 antreibt. Das Getriebezwischenrad 38 weist ein weiteres Stirnrad 42 auf, welches wiederum mit einem auf einer Abtriebswelle 44 angeordneten Stirnrad 46 kämmt. Auf diese Weise wird das Antriebsmoment des Antriebsmotors 32 auf die Abtriebswelle 44 übertragen.

Auf der Abtriebswelle 44 ist ein Koppelelement 48 vorgesehen, welches eine tordierbare Feder aufweist. Das Koppelelement 48 erlaubt eine relative Verdrehung von Abgasklappe 8 und Abtriebswelle 44 gegeneinander in Abhängigkeit eines von der Abgasklappe 8 ausgeübten Gegenmomentes gegen das Moment, das von der Abtriebswelle 44 über das Koppelelement 48 übertragen wird. Damit wird bei Anliegen der Abgasklappe 8 an einen Endanschlag ein definiertes Drehmoment auf die Abgasklappe 8 ausgeübt, welches ein sicheres Anliegen der Abgasklappe 8 an dem Endanschlag ermöglicht. Des Weiteren lässt sich eine Vibrationsdämpfung der Abgasklappe 8 mittels des Koppelelements 48 erreichen. Die Kupplung 12 des Abgasklappenmoduls 4, welche drehfest mit der Abgasklappenwelle 10 verbunden ist, weist Formschlussmittel auf, die in Formschluss mit der Abtriebswelle 44 stehen. Derartige Formschlussmittel können beispielsweise ein Vierkant sein.

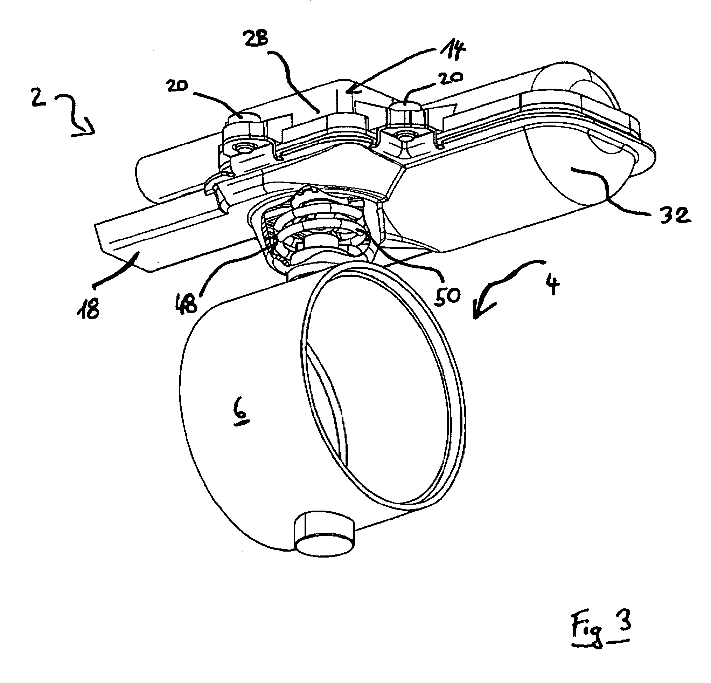

Fig. 3 zeigt ein weiteres Ausführungsbeispiel des erfindungsgemäßen Abgasklappenantriebes, wobei der Antriebsmotor 32 mit dem Getriebe 28 in dem Gehäuse 14 untergebracht sind. Diese Baueinheit ist mittels Schrauben 20 an dem als Abschirmblech bzw. Halteblech ausgebildeten Bauteil 18 befestigt, welches seinerseits mit einem Flansch des Anschlusssegmentes, durch welchen die Abgasklappenwelle 10 hindurchgreift, beispielsweise durch Verschweißen verbunden ist. Ein Teil des Bauteils 18 ist weggebrochen dargestellt, so dass das Koppelelement 48 sichtbar wird. Dieses Koppelelement 48 ist als gewundene Torsionsfeder 50, insbesondere als Zylinderfeder ausgebildet. Dieses Koppelelement 48 ist im Ausführungsbeispiel unmittelbar zwischen die ausgangsseitige Abtriebswelle des Getriebes sowie die Abgasklappenwelle geschaltet.

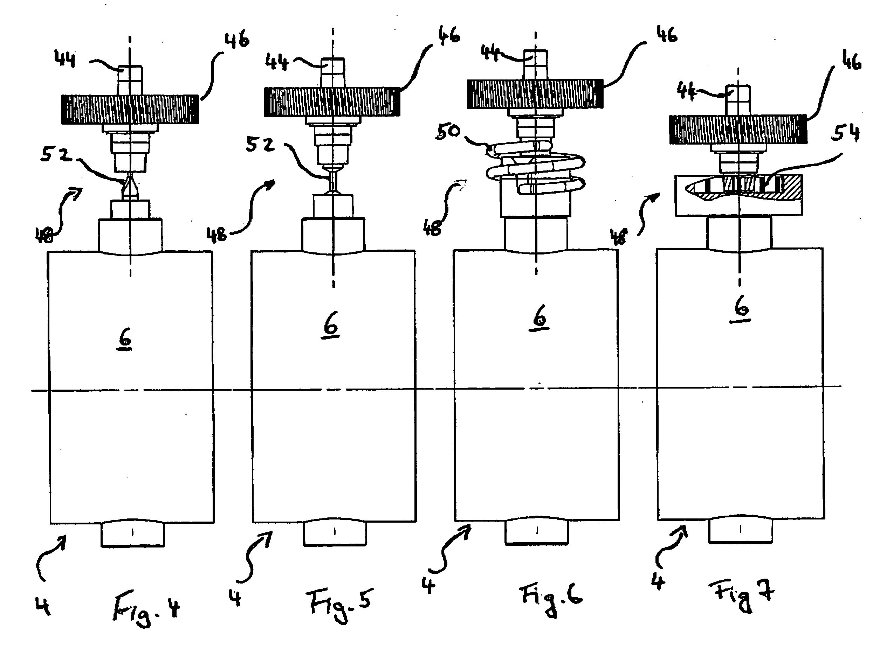

Die Ausführungsbeispiele der Figuren 4 bis 7 zeigen jeweils das Anschlusssegment 6 des Abgasklappenmoduls 4 sowie die mit der Abgasklappenwelle gekoppelte Abtriebswelle 44 des nicht dargestellten Antriebsmotors 32 bzw. Getriebes 28. Zwischen die Abtriebswelle 44, auf der das Stirnrad 46 sitzt, und der Abgasklappenwelle 10 der Abgasklappe 8 (Fig. 1) ist das Koppelelement 48 geschaltet, welches gemäß Figuren 4 und 5 als gerade Torsionsfeder 52 einerseits als Federband und andererseits als Torsionsstab ausgebildet ist. Gemäß Fig. 6 ist das Koppelelement 48 ähnlich zu Fig. 3 als gewundene Torsionsfeder 50, insbesondere als Zylinderfeder ausgebildet. In Fig. 7 ist das Koppelelement 48 als Spiralfeder 54 ausgebildet.

Wie aus den Figuren 4 bis 7 ersichtlich, variiert die axiale Baulänge der dort dargestellten Einheit in Abhängigkeit von der speziellen Ausbildung des Kopplungselementes 48. Die kürzeste Baulänge wird dementsprechend beim Einsatz einer Spiralfeder 54 als Koppelelement 48 erreicht. Die größte Baulänge kann sich beim Einsatz einer Zylinderfeder als Koppelement 48 gemäß Fig. 6 ergeben. Werden wie bei Figuren 4 und 5 gerade Torsionsfedern 52 als Koppelelement 48 eingesetzt, liegt die Baulänge zwischen denen der Figuren 6 und 7.

### Bezugszeichenliste

- 2: Abgasklappenantrieb
- 4: Abgasklappenmodul
- 6: Anschlusssegment
- 8: Abgaskappe
- 10: Abgasklappenwelle
- 12: Kupplung
- 14: Gehäuse
- 16: Stützbügel
- 18: Bauteil
- 20: Schrauben
- 22: Muttern
- 24: Halteelemente
- 26: Steckkontakt
- 28: Getriebe
- 32: Antriebsmotor
- 34: Motorausgangswelle
- 36: Schneckengewinde
- 38: Getriebezwischenrad
- 40: Stirnrad
- 42: Stirnrad
- 44: Abtriebswelle
- 46: Stirnrad
- 48: Koppelelement
- 50: gewundene Torsionsfeder
- 52: gerade Torsionsfeder
- 54: Spiralfeder

## Patentansprüche

1. Abgasklappenantrieb für ein Kraftfahrzeug mit einem Antriebsmotor (32) für eine Abgasklappe (8) des Kraftfahrzeuges, wobei der Antriebsmotor (32) mit einer Motorausgangswelle (34) ggf. über ein Getriebe (28) und einer ausgangsseitigen Abtriebswelle (44) mit einer Abgasklappenwelle (10) zur Betätigung der Abgasklappe (8) wirkverbunden ist, wobei in den Antriebsstrang zwischen dem Antriebsmotor (32) und der Abgasklappe (8) ein Koppelelement (48) geschaltet ist, welches eine Federelastizität zum Aufbau einer auf die Abgasklappe (8) wirkenden Vorspannung besitzt, **dadurch gekennzeichnet, dass** das Koppelelement (48) in einer Aufnahme an einem Abschirmblech und/oder Halteblech für den Antriebsmotor (32) und/oder das Getriebe (28) ausgebildet oder aufgenommen ist

2. Abgasklappenantrieb nach Anspruch 1, **dadurch gekennzeichnet, dass** die Motorausgangswelle (34) direkt mit der Abgasklappe (8) oder der Abgasklappenwelle (10) gekoppelt ist.

3. Abgasklappenantrieb nach Anspruch 1, **dadurch gekennzeichnet, dass** die Motorausgangswelle (34) über ein Getriebe (28) mit einer Getriebeabtriebswelle (44) mit der Abgasklappe (8) oder der Abgasklappenwelle (10) gekoppelt ist.

4. Abgasklappenantrieb nach einem der vorangegangenen Ansprüche, **dadurch gekennzeichnet, dass** der Antriebsmotor (32) ein Elektromotor ist.

5. Abgasklappenantrieb nach einem der vorangegangenen Ansprüche, **dadurch gekennzeichnet, dass** das Koppelelement (48) ein Elastomer ist.

6. Abgasklappenantrieb nach einem der Ansprüche 1 bis 4, **dadurch gekennzeichnet, dass** das Koppelement (48) eine Feder ist.

7. Abgasklappenantrieb nach einem der vorangegangenen Ansprüche, **dadurch gekennzeichnet, dass** das Koppelelement (48) als gewundene Torsionsfeder (50), z. B. als Zylinderfeder, ausgebildet ist.

8. Abgasklappenantrieb nach einem der Ansprüche 1 bis 6, **dadurch gekennzeichnet, dass** das Koppelement (48) als gerade Torsionsfeder (52), z. B. als Torsionsstab oder Federband, ausgebildet ist.

9. Abgasklappenantrieb nach einem der Ansprüche 1 bis 6, **dadurch gekennzeichnet, dass** das Koppelement (48) als Spiralfeder (54) ausgebildet ist.

10. Abgasklappenantrieb nach einem der vorangegangenen Ansprüche, **dadurch gekennzeichnet, dass** das Koppelelement (48) unmittelbar zwischen die Motorausgangswelle (34) und die Abgasklappenwelle (10) geschaltet ist.

11. Abgasklappenantrieb nach einem der vorangegangenen Ansprüche, **dadurch gekennzeichnet, dass** das Koppelelement (48) insbesondere unmittelbar zwischen die ausgangsseitige Abtriebswelle (44) des Getriebes (28) und die Abgasklappenwelle (10) geschaltet ist.

## Claims

1. Exhaust-gas valve drive for a motor vehicle having a drive motor (32) for an exhaust-gas valve (8) of the motor vehicle, the drive motor (32) being operatively connected by way of a motor output shaft (34) optionally via a gear mechanism (28) and an output-side driven shaft (44) to an exhaust-gas valve shaft (10) in order to actuate the exhaust-gas valve (8), a coupling element (48) being connected into the drive train between the drive motor (32) and the exhaust-gas valve (8), which coupling element (48) has a spring elasticity in order to build up a prestress which acts on the exhaust-gas valve (8), **characterized in that** the coupling element (48) is formed or received in a receptacle on a shielding plate and/or holding plate for the drive motor (32) and/or the gear mechanism (28).

2. Exhaust-gas valve drive according to Claim 1, **characterized in that** the motor output shaft (34) is coupled directly to the exhaust-gas valve (8) or the exhaust-gas valve shaft (10).

3. Exhaust-gas valve drive according to Claim 1, **characterized in that** the motor output shaft (34) is coupled via a gear mechanism (28) with a gear-mechanism output shaft (44) to the exhaust-gas valve (8) or the exhaust-gas valve shaft (10).

4. Exhaust-gas valve drive according to one of the preceding claims, **characterized in that** the drive motor (32) is an electric motor.

5. Exhaust-gas valve drive according to one of the preceding claims, **characterized in that** the coupling element (48) is an elastomer.

6. Exhaust-gas valve drive according to one of Claims 1 to 4, **characterized in that** the coupling element (48) is a spring.

7. Exhaust-gas valve drive according to one of the preceding claims, **characterized in that** the coupling element (48) is configured as a wound torsion spring (50), for example as a cylinder spring.

8. Exhaust-gas valve drive according to one of Claims 1 to 6, **characterized in that** the coupling element (48) is configured as a straight torsion spring (52), for example as a torsion rod or spring band.

9. Exhaust-gas valve drive according to one of Claims 1 to 6, **characterized in that** the coupling element (48) is configured as a spiral spring (54).

10. Exhaust-gas valve drive according to one of the preceding claims, **characterized in that** the coupling element (48) is connected directly between the motor output shaft (34) and the exhaust-gas valve shaft (10).

11. Exhaust-gas valve drive according to one of the preceding claims, **characterized in that** the coupling element (48) is connected, in particular, directly between the outlet-side driven shaft (44) of the gear mechanism (28) and the exhaust-gas valve shaft (10).

## Revendications

1. Entraînement de clapet de gaz d'échappement pour un véhicule automobile comprenant un moteur d'entraînement (32) pour un clapet de gaz d'échappement (8) du véhicule automobile, le moteur d'entraînement (32) étant en liaison fonctionnelle, par un arbre de sortie de moteur (34) éventuellement par le biais d'une transmission (28) et par un arbre de prise de force (44) du côté de la sortie, avec un arbre de clapet de gaz d'échappement (10) pour l'actionnement du clapet de gaz d'échappement (8), un élément d'accouplement (48) étant monté dans la chaîne cinématique entre le moteur d'entraînement (32) et le clapet de gaz d'échappement (8), lequel élément d'accouplement possède une élasticité de ressort pour produire une précontrainte agissant sur le clapet de gaz d'échappement (8), **caractérisé en ce que** l'élément d'accouplement (48) est réalisé ou est reçu dans un logement sur une tôle de blindage et/ou une tôle de fixation pour le moteur d'entraînement (32) et/ou la transmission (28).

2. Entraînement de clapet de gaz d'échappement selon la revendication 1, **caractérisé en ce que** l'arbre de sortie de moteur (34) est accouplé directement au clapet de gaz d'échappement (8) ou à l'arbre de clapet de gaz d'échappement (10).

3. Entraînement de clapet de gaz d'échappement selon la revendication 1, **caractérisé en ce que** l'arbre de sortie de moteur (34) est accouplé par le biais d'une transmission (28) avec un arbre de prise de force de transmission (44) au clapet de gaz d'échappement (8) ou à l'arbre de clapet de gaz d'échappement (10).

4. Entraînement de clapet de gaz d'échappement selon l'une quelconque des revendications précédentes, **caractérisé en ce que** le moteur d'entraînement (32) est un moteur électrique.

5. Entraînement de clapet de gaz d'échappement selon l'une quelconque des revendications précédentes, **caractérisé en ce que** l'élément d'accouplement (48) est un élastomère.

6. Entraînement de clapet de gaz d'échappement selon l'une quelconque des revendications 1 à 4, **caractérisé en ce que** l'élément d'accouplement (48) est un ressort.

7. Entraînement de clapet de gaz d'échappement selon l'une quelconque des revendications précédentes, **caractérisé en ce que** l'élément d'accouplement (48) est réalisé sous forme de ressort de torsion enroulé (50), par exemple sous forme de ressort cylindrique.

8. Entraînement de clapet de gaz d'échappement selon l'une quelconque des revendications 1 à 6, **caractérisé en ce que** l'élément d'accouplement (48) est réalisé sous forme de ressort de torsion droit (52), par exemple sous forme de barre de torsion ou de bande élastique.

9. Entraînement de clapet de gaz d'échappement selon l'une quelconque des revendications 1 à 6, **caractérisé en ce que** l'élément d'accouplement (48) est réalisé sous forme de ressort spiral (54).

10. Entraînement de clapet de gaz d'échappement selon l'une quelconque des revendications précédentes, **caractérisé en ce que** l'élément d'accouplement (48) est monté directement entre l'arbre de sortie de moteur (34) et l'arbre de clapet de gaz d'échappement (10).

11. Entraînement de clapet de gaz d'échappement selon l'une quelconque des revendications précédentes, **caractérisé en ce que** l'élément d'accouplement (48) est monté notamment directement entre l'arbre de prise de force (44) de la transmission (28) du côté de la sortie et l'arbre de clapet de gaz d'échappement (10).
